# EUROPÄISCHE PATENTSCHRIFT

(11) **EP 1 267 239 B1**
(45) Veröffentlichungstag und Bekanntmachung des Hinweises auf die Patenterteilung: **26.07.2006**
(21) Anmeldenummer: 02010712.4
(22) Anmeldetag: 14.05.2002
(51) Int. Cl.: G05D 23/02, F01P 7/16

(54) **Thermostatventil**
Thermostatic valve
Soupape thermostatique

(30) Priorität: 13.06.2001 DE 10128634
(43) Veröffentlichungstag der Anmeldung: 18.12.2002
(73) Patentinhaber: ITW HENSCHEL GMBH, 29693 HODENHAGEN (DE)
(72) Erfinder: Heldberg, Carsten, Dipl.-Ing., 27308 Kirchlinteln-Otersen (DE); Bäther, Thomas, 29690 Schwarmstedt (DE)
(74) Vertreter: Graalfs, Edo

(56) Entgegenhaltungen:
- GB-A- 517 012
- GB-A- 2 250 085
- US-A- 3 659 783
- US-A- 4 454 982
- US-A- 5 494 005
- US-A- 5 595 065

## Beschreibung

Die Erfindung bezieht sich auf ein Thermostatventil nach dem Patentanspruch 1.

Thermostatventile für Kühler in Automobilen oder dergleichen sind in unterschiedlichsten Ausführungsformen bekannt geworden. Häufig ist erwünscht, das Thermostatventil nicht nur mit einem einzigen Durchströmquerschnitt zu versehen, sondern den Durchströmquerschnitt temperaturabhängig zu machen. Bekannte Thermostatventile weisen üblicherweise ein sog. Dehnstoffelement auf, dessen axiale Ausdehnung mit steigender Temperatur größer wird. Es ist bekannt, bei Thermostatventilen, deren temperaturabhängiger Durchströmquerschnitt nach einer vorgegebenen Kennlinie verlaufen soll, mit zwei Dehnstoffelementen zu verwirklichen. Dies ist jedoch relativ aufwendig, auch im Hinblick auf die Montage.

Ein Thermostatventil gemäß dem Oberbegriff des Anspruchs 1 ist aus US-A-5 494 005 bekannt.

Der Erfindung liegt die Aufgabe zugrunde, ein Thermostatventil zu schaffen, das auf eine vorgegebene temperaturabhängige Durchflußkennlinie hin auslegbar ist, dabei jedoch einfach im Aufbau ist und mit geringem Aufwand an Bauteilen hergestellt werden kann.

Diese Aufgabe wird durch die Merkmale des Patentanspruchs 1 gelöst.

Bei dem erfindungsgemäßen Thermostatventil ist zwischen einem Widerlager im Gehäuse des Thermostatventils und einem Ventilglied ein Dehnstoffelement angeordnet. Das Ventilglied wird mit Hilfe einer Feder gegen einen Ventilsitz vorgespannt, wodurch der Durchgang zwischen Eintritts- und Austrittsöffnung der Kühlflüssigkeit weitgehend abgesperrt ist. Falls ein O-Dichtring oder dergleichen nicht verwendet wird, wird eine bestimmte Leckmenge zugelassen. Bei einer temperaturabhängigen Ausdehnung des Dehnstoffelements bewegt sich das Ventilglied in den Durchgang hinein und entfernt sich mit steigender Temperatur vom Ventilsitz. In dem Verstellbereich des Ventilglieds sind mehrere konische bzw. zylindrische Dichtflächen im Durchgang vorgesehen, welche einen Spalt mit dem Umfang des Ventilelements bilden. Ist die Wirkfläche zylindrisch, ändert sich der Durchströmquerschnitt bei einer Verstellung im Bereich dieser Wirkfläche nicht. Ist die Wirkfläche hingegen konisch, ergibt sich eine größer werdende Wirkfläche mit zunehmender Entfernung vom Ventilsitz. Durch eine entsprechende Ausbildung der Wirkflächen im Hinblick auf ihre Länge und ihre Gestalt läßt sich mithin in Abhängigkeit von der Kühlflüssigkeitstemperatur eine bestimmte Kennlinie für die Durchflußmenge an Kühlflüssigkeit erreichen, beispielsweise ansteigende Durchflußmenge mit steigender Temperatur oder auch konstante Durchflußmenge in einem bestimmten Temperaturbereich.

Nach einer Ausgestaltung der Erfindung sind im Durchgang im Bereich der Wirkflächen in Umfangsrichtung beabstandete achsparallele Führungsabschnitte, z. B. Rippen, vorgesehen, die das Ventilglied bei seiner Verstellung vom Ventilsitz fort führen, so daß über den Umfang des Ventilsitzes ein gleichmäßig breiter Spalt erhalten wird, der im Bereich der Führung naturgemäß unterbrochen ist.

Nach einer weiteren Ausgestaltung der Erfindung ist das Ventilglied scheibenartig ausgebildet und sitzt mit einer mittigen Öffnung auf einem axialen Zapfen des Gehäuses des Dehnstoffelements. Es kann relativ passend auf dem Zapfen sitzen, so daß ein Festlegen durch Schweißen, Löten oder dergleichen oder andere Mittel nicht erforderlich ist. Das Dehnstoffelement weist einen Stift auf, der axial im Gehäuse des Dehnstoffelements geführt ist und mit steigender Temperatur weiter aus dem Gehäuse heraus bewegt wird. Nach einer Ausgestaltung der Erfindung ist dieser Stift in einer Ausnehmung des Widerlagers passend eingesetzt, so daß eine Abstützung des Dehnstoffelements über den Stift erfolgt, während das Gehäuse des Dehnstoffelements am anderen Ende über das Ventilglied abgestützt ist.

Nach einer weiteren Ausgestaltung der Erfindung ist die Eintrittsöffnung in einem Hülsenteil ausgebildet, das am Umfang einen Flansch aufweist, gegen den sich das offene Ende des Gehäuses dichtend anlegt. Eine Verbindung zwischen Gehäuse und Flansch kann nach einer weiteren Ausgestaltung der Erfindung mittels Rotationsschweißen erfolgen. Zwischen dem Flansch und dem Ventilglied kann die bereits erwähnte Vorspannfeder angeordnet werden.

Nach einer weiteren Ausgestaltung der Erfindung ist die Hülse an dem dem Gehäuse zugewandten Ende mit mehreren achsparallelen in Umfangsrichtung beabstandeten Armen versehen, die an den freien Enden nach innen eine Führung für den über das Ventilglied hinaus verlängerten Zapfen bilden, der bei einer ausreichend weiten Verstellung des Ventilglieds in die Führung eintaucht. Darüber hinaus begrenzen die freien Enden der Armen die Verstellung des Ventilglieds.

Die Erfindung wird nachfolgend anhand von Zeichnungen näher erläutert.
- Fig. 1: zeigt im Schnitt ein Thermostatventil nach der Erfindung in schematischer Darstellung.
- Fig. 2: zeigt das Thermostatventil nach Fig. 1 bei einer ersten Verstellung.
- Fig. 3: zeigt das Thermostatventil nach Fig. 1 in einer zweiten Verstellposition.
- Fig. 4: zeigt das Thermostatventil nach Fig. 1 in einer dritten Verstellposition.
- Fig. 5: zeigt die Kennlinie für den Kühlmitteldurchfluß durch das Thermostatventil nach den Fig. 1 bis 4 in Abhängigkeit von der Kühlmitteltemperatur.

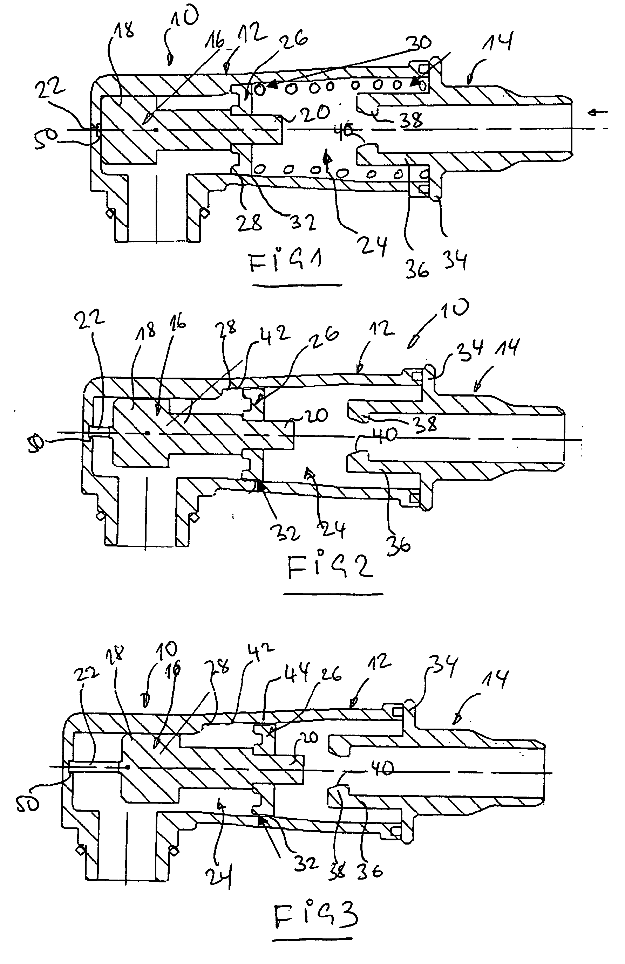

Das in den Fig. 1 bis 4 dargestellte Thermostatventil weist allgemein das Bezugszeichen 10 auf und enthält ein Gehäuseteil 12 sowie ein Hülsenteil 14. Das Gehäuseteil 12 ist rechtwinklig und nimmt im Inneren ein Dehnstoffelement 16 auf, das ein Gehäuse 18 aufweist, das annähernd das Gehäuseinnere im linken Bereich ausfüllt, nach rechts jedoch abgestuft im Durchmesser kleiner wird und am rechten Ende einen axialen Zapfen 20 aufweist. Am linken Ende des Gehäuses 18 ist ein Stift 22 zu erkennen, der in Abhängigkeit von der Temperatur mehr oder weniger weit aus dem Dehnstoffgehäuse 18 vorsteht, wie nachfolgend noch näher beschrieben wird. Im Gehäuseteil 12 ist ein axialer Durchgang 24 ausgebildet, in dem ein Ventilglied 26 angeordnet ist, das mit Hilfe des Dehnstoffelements 16 von einem Ventilsitz 28 nach rechts verstellt werden kann gegen die Wirkung einer Schraubenfeder 30, die mit dem linken Ende am Ventilglied 26 anliegt. Das Ventilglied 26 ist ringartig ausgebildet und hat am Umfang eine Dichtfläche 32.

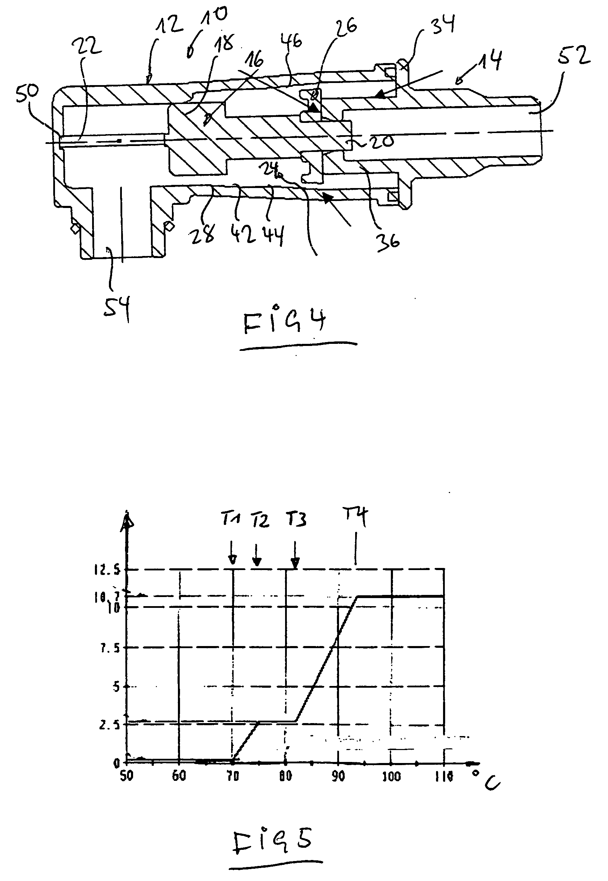

Das Hülsenteil 14 weist einen radialen Flansch 34 im Umfang auf, der dichtend gegen das freie Ende des Gehäuseteils 12 anliegt und an dieser Stelle, etwa durch Rotationsschweißverfahren, fest mit dem Gehäuseteil 12 verbindbar ist. Die Feder 30 stützt sich am Flansch 34 ab. An das Hülsenteil 14 sind am linken Ende, in den Durchgang 24 hineinstehend, mehrere im Umfangsabstand angeordnete Arme 36 angeformt, die sich achsparallel in den Durchgang 24 hinein erstrecken. An nach innen abgewinkelten Abschnitten 38 der Arme 36 ist am freien Ende ein Führungsabschnitt 40 gebildet, dessen Funktion weiter unten näher erläutert wird. Die Feder 30 befindet sich zwischen den Armen 36 und der Wand des Durchgangs 24, wodurch sie in diesem Bereich eine Führung erfährt. Nebenbei gesagt ist die Feder 30 in den Darstellungen nach den Fig. 2 bis 4 nicht gezeigt.

Der Durchgang 24 weist an seiner Wandung axial aufeinanderfolgend mehrere Wirkflächen auf. Eine erste leicht konisch ausgebildete Wirkfläche 42 ist wirksam in einer Stellung des Ventilglieds 26 nach Fig. 2. Bewegt sich das Ventilglied 26 vom Ventilsitz 28 gemäß Fig. 1 fort aufgrund der Wirkung des Dehnstoffelements 16 und gelangt die Dichtfläche 32 des Ventilglieds 26 in den Bereich der ersten Wirkfläche 42, vergrößert sich der Durchströmquerschnitt allmählich in Abhängigkeit von der Temperatur. Dies ist in Fig. 5 anhand der Kennlinie zu erkennen. Bis zu einer Temperatur von 70°C bleibt das Ventilglied 26 am Dichtsitz 28. Ab 70°C beginnt das Dehnstoffelement 16 das Ventilglied 26 nach rechts zu bewegen. In Fig. 2 ist die Stellung des Ventilglieds 26 für die Temperatur von etwa 75°C gezeigt, die mit T2 bezeichnet ist. Ab dieser Stellung des Ventilglieds 26 beginnt das Wirksamwerden einer zweiten Wirkfläche 44 gemäß Fig. 3. Bewegt sich das Ventilglied 26 im Bereich dieser Wirkfläche, bleibt der Durchströmquerschnitt konstant. Dies entspricht dem Kennlinienbereich zwischen den Temperaturen T2 und T3. Bewegt sich das Ventilglied aus der Stellung nach Fig. 3 in Richtung der Stellung nach Fig. 4, kommt eine dritte konische Wirkfläche 46 zum Zuge. Hierbei steigt der Durchströmquerschnitt bzw. der Durchfluß zwischen den Temperaturen T3 und T4 linear auf einen maximalen Wert. Fig. 4 zeigt die Position des Ventilglieds bei vollständig geöffnetem Thermostatventil. Das Ventilglied 26 wird an einer weiteren Bewegung nach rechts durch die freien Enden der Arme 36 gehindert.

Wie aus Fig. 4 zu erkennen, taucht in der vollständigen Öffnungsstellung des Ventilglieds 26 der Zapfen 20 in die Führung 40 ein und wird auf diese Weise radial gehalten.

Der Stift 22 ist in einer Ausnehmung 50 am linken Ende des Durchgangs 24 eingepaßt und auf diese Weise gehalten.

Der Durchgang 24 bzw. seine Wandung ist mit achsparallelen im Umfangsabstand angeordneten Führungsabschnitten oder Rippen versehen, durch welche das Ventilglied 26 bei seiner Bewegung aus der Position nach Fig. 1 in die Position nach Fig. 4 axial geführt ist. Diese Führungsabschnitte sind in den Figuren nicht dargestellt.

Im Hülsenteil 14 ist die Eintrittsöffnung 52 für Kühlflüssigkeit und im abgewinkelten Abschnitt des Gehäuseteils 12 die Austrittsöffnung 54 für Kühlflüssigkeit ausgebildet.

Man erkennt, daß durch eine entsprechende Ausbildung der Wirkflächen 42 bis 46, d. h. durch ihren Verlauf und den radialen Abstand zum Ventilglied 26 der Durchströmquerschnitt temperaturabhängig ausgebildet werden kann, beispielsweise jede beliebige Kennlinie zwischen der Stellung nach Fig. 1 und der Stellung nach Fig. 4 gefahren werden kann.

## Patentansprüche

1. Thermostatventil mit
- einem länglichen Gehäuse (12, 14), das an einem Ende eine Eintrittsöffnung (52) und am anderen Ende eine Austrittsöffnung (54) sowie einen Durchgang (24) dazwischen für Kühlflüssigkeit aufweist,
- einem im Durchgang (24) bewegbar gelagerten Ventilglied (26) mit einer Dichtfläche (32) oder -kante am Umfang,
- einem Dehnstoffelement (16) zwischen einem Widerlager (50) im Gehäuse (10) und dem Ventilglied (26), dessen Länge sich mit steigender Temperatur vergrößert,
- einem ringförmigen Ventilsitz (28) im Durchgang (24), gegen den das Ventilglied (26) mittels einer Feder (30) im Gehäuse vorgespannt ist, wodurch der Durchgang weitgehend abgesperrt ist,
- **gekennzeichnet durch** mehrere sich an den Ventilsitz (28) anschließende koaxial hintereinander angeordnete konische oder zylindrische Wirkflächen (42, 44, 46), die mit der Dichtfläche (32) des Ventilglieds (26) einen umlaufenden Spalt bilden, wenn das Ventilglied (26) vom Dehnstoffelement (16) in den Bereich einer der Wirkflächen (42 bis 46) verstellt wird, wobei der Durchströmquerschnitt der Spalte mit größer werdendem Abstand der Wirkflächen vom Ventilsitz (28) größer wird.

2. Thermostatventil nach Anspruch 1, **dadurch gekennzeichnet, daß** im Durchgang (24) in Umfangsrichtung beabstandete achsparallele Führungsabschnitte für das Ventilglied (26) vorgesehen sind.

3. Thermostatventil nach Anspruch 1 oder 2, **dadurch gekennzeichnet, daß** das Ventilglied (26) auf einem axialen Zapfen (20) des Gehäuses (18) für das Dehnstoffelement (16) sitzt.

4. Thermostatventil nach einem der Ansprüche 1 bis 3, **dadurch gekennzeichnet, daß** das Dehnstoffelement (16) einen Stift (22) aufweist, der axial bewegbar in einem Gehäuse (18) des Dehnstoffelements (16) angeordnet ist und der mit steigender Temperatur weiter aus dem Gehäuse (18) herausgeschoben wird und das freie Ende des Stiftes (22) in einer Ausnehmung (50) des Widerlagers annähernd passend aufgenommen ist.

5. Thermostatventil nach einem der Ansprüche 1 bis 4, **dadurch gekennzeichnet, daß** die Eintrittsöffnung (52) in einem Hülsenteil (14) ausgebildet ist, das am Umfang einen Flansch (34) aufweist, gegen den das öffene Ende des Gehäuses (12) dichtend anliegt.

6. Thermostatventil nach Anspruch 5, **dadurch gekennzeichnet, daß** Gehäuse (12) und Flansch (34) mittels Rotationsschweißen miteinander verbunden sind.

7. Thermostatventil nach Anspruch 3 und 4 oder 5, **dadurch gekennzeichnet, daß** die Hülse (14) an dem dem Gehäuse (12) zugewandten Ende mehrere achsparallele in Umfangsrichtung beabstandete Arme (36) aufweist, die an dem freien Ende im Durchgang (24) eine Führung (40) für den über das Ventilglied (26) hinaus verlängerten Zapfen (20) bilden, der bei einer ausreichend weiten Verstellung des Ventilglieds (26) in die Führung (40) eintaucht, wobei die freien Enden der Arme (36) die Verstellung des Ventilglieds (26) begrenzen.

8. Thermostatventil nach einem der Ansprüche 1 bis 7, **dadurch gekennzeichnet, daß** in einem ersten Verstellbereich oberhalb einer ersten Temperatur (T1) bis zu einer zweiten Temperatur (T2) das Ventilglied (26) mit einer ersten Wirkfläche (42) so zusammenwirkt, so daß nach Maßgabe der Verstellung des Ventilglieds (26) ein sich allmählich vergrößernder erster Spalt zwischen Ventilglied (26) und der ersten Wirkfläche (42) gebildet ist, daß in einem zweiten Verstellbereich zwischen der zweiten Temperatur (T2) und einer dritten Temperatur (T3) das Ventilglied (26) mit einer zweiten Wirkfläche (44) so zusammenwirkt, daß ein zweiter Spalt konstanter Breite gebildet ist, der größer als der erste Spalt ist und daß in einem dritten Verstellbereich zwischen der dritten Temperatur (T3) und einer vierten Temperatur (T4) das Ventilglied (26) mit einer dritten Wirkfläche (46) so zusammenwirkt, daß nach Maßgabe der Verstellung des Ventilglieds (26) ein sich allmählich vergrößernder dritter Spalt gebildet ist, während oberhalb der vierten Temperatur (T4) der Spalt annähernd konstant bleibt.

## Claims

1. Thermostatic valve, with
- an elongate housing (12, 14) which has at one end an inlet orifice (52) and at the other end an outlet orifice (54) and also a passage (24) between them for cooling liquid,
- a valve member (26) mounted movably in the passage (24) and having a sealing surface (32) or sealing edge on the circumference,
- an expandable material element (16) between an abutment (50) in the housing (10) and the valve member (26), the length of which expandable material element increases with a rising temperature,
- an annular valve seat (28) in the passage (24), against which valve seat the valve member (26) is prestressed by means of a spring (30) in the housing, with the result that the passage is largely shut off,
**characterized by**
- a plurality of conical or cylindrical active surfaces (42, 44, 46) which adjoin the valve seat (28) and are arranged coaxially one behind the other and which with the sealing surface (32) of the valve member (26) form a continuous gap, the valve member (26) being adjusted into the region of one of the active surfaces (42 to 46) by the expandable material element (16), the throughflow cross section of the gap becoming larger with an increasing distance of the active surfaces from the valve seat (28).

2. Thermostatic valve according to Claim 1, **characterized in that** axially parallel guide portions spaced apart in the circumferential direction are provided in the passage (24) for the valve member (26).

3. Thermostatic valve according to Claim 1 or 2, **characterized in that** the valve member (26) is seated on an axial tenon (20) of the housing (18) for the expandable material element (16).

4. Thermostatic valve according to one of Claims 1 to 3, **characterized in that** the expandable material element (16) has a pin (22) which is arranged axially movably in a housing (18) of the expandable material element (16) and which is pushed further out of the housing (18) with a rising temperature, and the free end of the pin (22) is received with an approximate fit in a recess (50) of the abutment.

5. Thermostatic valve according to one of Claims 1 to 4, **characterized in that** the inlet orifice (52) is formed in a sleeve part (14) which has on the circumference a flange (34) against which the open end of the housing (12) bears sealingly.

6. Thermostatic valve according to Claim 5, **characterized in that** the housing (12) and flange (34) are connected to one another by means of spin welding.

7. Thermostatic valve according to Claims 3 and 4 or 5, **characterized in that** the sleeve (14) has, at the end facing the housing (12), a plurality of axially parallel arms (36) which are spaced apart in the circumferential direction and form at the free end, in the passage (24), a guide (40) for the tenon (20) which is prolonged beyond the valve member (26) and which penetrates into the guide (40) in the event of a sufficiently wide adjustment of the valve member (26), the free ends of the arms (36) limiting the adjustment of the valve member (26).

8. Thermostatic valve according to one of Claims 1 to 7, **characterized in that**, in a first range of adjustment above a first temperature (T1) up to a second temperature (T2), the valve member (26) cooperates with a first active surface (42) such that, in accordance with the adjustment of the valve member (26), a gradually increasing first gap is formed between the valve member (26) and the first active surface (42), **in that**, in a second range of adjustment between the second temperature (T2) and a third temperature (T3), the valve member (26) cooperates with a second active surface (44) such that a second gap of constant width, which is larger than the first gap, is formed, and **in that**, in a third range of adjustment between the third temperature (T3) and a fourth temperature (T4), the valve member (26) cooperates with a third active surface (46) such that, in accordance with the adjustment of the valve member (26), a gradually increasing third gap is formed, whilst, above the fourth temperature (T4), the gap remains approximately constant.

## Revendications

1. Soupape thermostatique comprenant
- un boîtier allongé (12, 14), qui présente à une extrémité une ouverture d'entrée (52) et à l'autre extrémité une ouverture de sortie (54) ainsi qu'un passage (24) entre elles pour un liquide de refroidissement,
- un organe de soupape (26) monté de manière déplaçable dans le passage (24), avec une surface d'étanchéité (32) ou un bord d'étanchéité sur la périphérie,
- un élément de matière extensible (16) entre une butée (50) dans le boîtier (10) et l'organe de soupape (26), dont la longueur augmente avec l'augmentation de la température,
- un siège de soupape annulaire (28) dans le passage (24), contre lequel l'organe de soupape (26) est précontraint au moyen d'un ressort (30) dans le boîtier, de sorte que le passage soit substantiellement bloqué,
**caractérisée par**
- plusieurs surfaces actives (42, 44, 46) coniques ou cylindriques disposées coaxialement les unes derrière les autres et se raccordant au siège de soupape (28), qui forment avec la surface d'étanchéité (32) de l'organe de soupape (26) une fente périphérique lorsque l'organe de soupape (26) est déplacé par l'élément de matière extensible (16) dans la région de l'une des surfaces actives (42 à 46), la section transversale d'écoulement de la fente devenant plus grande au fur et à mesure de l'augmentation de la distance des surfaces actives au siège de soupape (28).

2. Soupape thermostatique selon la revendication 1, **caractérisée en ce que** l'on prévoit dans le passage (24) des portions de guidage pour l'organe de soupape (26), d'axes parallèles et espacées dans la direction périphérique.

3. Soupape thermostatique selon la revendication 1 ou 2, **caractérisée en ce que** l'organe de soupape (26) repose sur un tourillon axial (20) du boîtier (18) pour l'élément de matière extensible (16).

4. Soupape thermostatique selon l'une quelconque des revendications 1 à 3, **caractérisée en ce que** l'élément de matière extensible (16) présente une goupille (22) qui est disposée de manière déplaçable axialement dans un boîtier (18) de l'élément de matière extensible (16) et qui est davantage poussée hors du boîtier (18) plus la température augmente, et l'extrémité libre de la goupille (22) est reçue avec ajustement approximatif dans un évidement (50) de la butée.

5. Soupape thermostatique selon l'une quelconque des revendications 1 à 4, **caractérisée en ce que** l'ouverture d'entrée (52) est réalisée dans une partie de douille (14) qui présente sur la périphérie une bride (34) contre laquelle l'extrémité ouverte du boîtier (12) s'applique de manière hermétique.

6. Soupape thermostatique selon la revendication 5, **caractérisée en ce que** le boîtier (12) et la bride (34) sont connectés l'un à l'autre au moyen de soudage par friction rotative.

7. Soupape thermostatique sel on les revendications 3 et 4 ou 5, **caractérisée en ce que** la douille (14) présente, au niveau de l'extrémité tournée vers le boîtier (12), plusieurs bras (36) d'axes parallèles espacés dans la direction périphérique, qui forment sur l'extrémité libre dans le passage (24) une coulisse (40) pour le tourillon (20) prolongé au-delà de l'organe de soupape (26), qui, dans le cas d'un déplacement suffisamment grand de l'organe de soupape (26), plonge dans la coulisse (40), les extrémités libres des bras (36) limitant le déplacement de l'organe de soupape (26).

8. Soupape thermostatique selon l'une quelconque des revendications 1 à 7, **caractérisée en ce que** dans une première région de déplacement au-dessus d'une première température (T1) jusqu'à une deuxième température (T2) l'organe de soupape (26) coopère avec une première surface active (42) de telle sorte qu'en fonction du déplacement de l'organe de soupape (26) il se forme une première fente augmentant progressivement entre l'organe de soupape (26) et la première surface active (42), **en ce que** dans une deuxième région de déplacement entre la deuxième température (T2) et une troisième température (T3), l'organe de soupape (26) coopère avec une deuxième surface active (44) de telle sorte qu'une deuxième fente de largeur constante soit formée, laquelle est plus grande que la première fente et **en ce que** dans une troisième région de déplacement entre la troisième température (T3) et une quatrième température (T4) l'organe de soupape (26) coopère avec une troisième surface active (46) de telle sorte qu'en fonction du déplacement de l'organe de soupape (26) il se forme une troisième fente augmentant progressivement tandis qu'au-dessus de la quatrième température (T4) la fente reste approximativement constante.
